# EUROPEAN PATENT SPECIFICATION

(11) **EP 1 739 876 B1**
(45) Date of publication and mention of the grant of the patent: **07.03.2012**
(21) Application number: 06253445.8
(22) Date of filing: 30.06.2006
(51) Int. Cl.: H04L 12/18

(54) **Method, device, and system for terminating user session in a multicast service**
Verfahren, Vorrichtung und System zum Beenden einer Teilnehmersitzung in einem Multicast-Dienst
Procédé, dispositif et système de terminaison d'une session utilisateur dans un service de multidiffusion

(30) Priority: 30.06.2005 CN 200510080582
(43) Date of publication of application: 03.01.2007
(73) Proprietor: Huawei Technologies Co., Ltd., Shenzhen, Guangdong Province 518129 (CN)
(72) Inventor: Hu, Lixin Huawei Administration Building Bantian, Guangdong (CN)
(74) Representative: Thun, Clemens

(56) References cited:
- "Universal Mobile Telecommunications System (UMTS); Multimedia Broadcast/Multicast Service (MBMS); Architecture and functional description (3GPP TS 23.246 version 6.6.0 Release 6); ETSI TS 123 246" ETSI STANDARDS, EUROPEAN TELECOMMUNICATIONS STANDARDS INSTITUTE, SOPHIA-ANTIPO, FR, vol. 3-SA2, no. V660, March 2005 (2005-03), XP014027540 ISSN: 0000-0001
- "Universal Mobile Telecommunications System (UMTS); Telecommunication management; Charging management; Multimedia Broadcast and Multicast Service (MBMS) charging (3GPP TS 32.273 version 6.0.0 Release 6); ETSI TS 132 273" ETSI STANDARDS, EUROPEAN TELECOMMUNICATIONS STANDARDS INSTITUTE, SOPHIA-ANTIPO, FR, vol. 3-SA5, no. V600, 23 June 2005 (2005-06-23), XP014030713 ISSN: 0000-0001
- "Digital cellular telecommunications system (Phase 2+); Universal Mobile Telecommunications System (UMTS); 3G Security; Security of Multimedia Broadcast/Multicast Service (MBMS) (3GPP TS 33.246 version 6.1.0 Release 6); ETSI TS 133 246" ETSI STANDARDS, EUROPEAN TELECOMMUNICATIONS STANDARDS INSTITUTE, SOPHIA-ANTIPO, FR, vol. 3-SA3, no. V620, March 2005 (2005-03), XP014028229 ISSN: 0000-0001

## Description

### Field of the Technology

The present invention relates to the multicast technology field, and more particularly to methods for terminating a user session in a multicast service, a multicast service device, a device for terminating user sessions, and a system of multicast services.

### Background of the Invention

In the wireless communication field, a multicast service is a point-to-multipoint unidirectional bearer service in which data from a single source entity is transmitted to multiple recipients, i.e., a device for transmitting data is serving for multiple recipients simultaneously. In a multicast mode, transmitting the same data to multiple recipients allows network channels to be shared, thereby raising the utilization efficiency of networks. However, a unicast service is a point-to-point service, where one device for transmitting data serves just one individual receiving device.

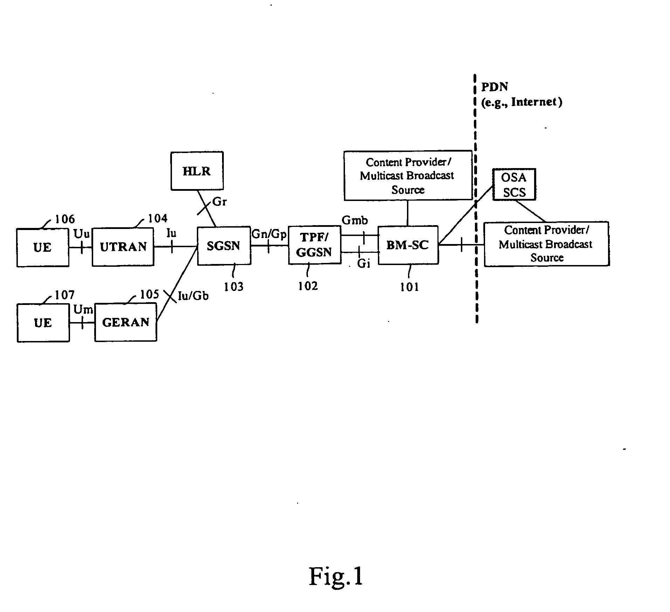

Fig. 1 illustrates the architecture of a wireless network supporting the Multimedia Broadcast/Multicast Service (MBMS). In the existing 3GPP and 3GGP2, a Broadcast/Multicast Service Center (BM-SC) 101 is for supporting MBMS. In Fig. 1, the BM-SC 101 connects to a content provider/multicast broadcast source and it also connects to a Traffic Plane Function/Gateway General Package Radio Service Support Node (TPF/GGSN) 102 via a Gmb interface or Gi interface. One BM-SC 101 may connect to more than one TPF/GGSN 102. A TPF/GGSN 102 connects to a Serving GPRS Support Node (SGSN) 103 via a Gn/Gp interface. One TPF/GGSN 102 may connect to more than one SGSN 103. An SGSN 103 connects to a Universal Mobile Telecommunication System (UMTS) Terrestrial Access Network (UTRAN) 104 via an Iu interface. A UTRAN 104 connects to a User Equipment (UE) 106 via a Uu interface. The SGSN 103 may also connect to a GSM Enhanced Data rates for GSM Evolution (EDGE) Radio Access Network (GERAN) 105 via an Iu/Gb interface. A GERAN 105 connects to a UE 107 via a Um interface. The GGSN and SGSN are nodes in a Core Network (CN) of a wireless network.

The methods of starting and terminating a user session in the existing MBMS are as follows.

When a receiving device needs to receive multicast data, it registers at a device for transmitting multicast data. If the receiving device no longer wants to receive multicast data, it initiates a leaving process, i.e., MBMS multicast deactivation, to the device for transmitting multicast data. Once, the process of MBMS multicast deactivation is completed, the device for transmitting multicast data stops sending multicast data to the receiving device. After all the receiving devices have been deactivated, the device for transmitting multicast data stops sending multicast data.

Furthermore, in order to prevent unsubscribed or unpaid users from enjoying multicast services, in a multicast service group, each practical multicast service is assigned an MBMS Service key (MSK),which is known to only users of the group and multicast service providers, and users outside the group have no right to information of the key. The shared MSK is not for encrypting multicast data directly but for accessing control, generating an MBMS Transport Key (MTK) and encrypting the MTK. The multicast service provider uses a MTK to encrypt multicast data. Users in the corresponding group use the same shared MTK to decrypt the received multicast data so as to obtain the contents of the multicast data. Since users outside the group do not have the shared MTK, they can not obtain the multicast data's contents Also, the multicast service provider periodically sends an updated MSK to each user of a group to ensure the information security

If a user in a group wishes to stop receiving multicast data, it will send a message for MBMS multicast deactivation to the multicast service provider. Once the multicast service provider receives the message, it will stop sending MSKs. Thus, the user will no longer have the correct MSK and cannot decrypt the received multicast data, thereby realizing the object of stopping the user's receiving multicast data. Here, the multicast service provider usually refers to a device for transmitting multicast data, e.g., a BM-SC.

From the aforementioned process, it can be seen that no matter which method is adapted to terminate a user session, it is always a user who initiates the process of MBMS multicast deactivation to terminate the user session.

In addition, in the multicast mode, the network can also initiate a process of terminating user sessions. However, the process of terminating user sessions initiated by the network is for a group of users but not for a single user.

3GPP TS 23.246 describes the stage 2 description (architectural solution and functionalities) for the MBMS Bearer Service. Specifically, it describes an MBMS Multicast Service Deactivation procedure adopting IP multicast address. APN and IMSI together to identify the MBMS UE Context to be deleted.

### Summary

The present invention provides methods, devices and a system for terminating a user session in a multicast service. The present invention is implemented as follows.

The present invention provides a method for terminating a user session in a multicast service, including: initiating, by a multicast service device, a request for terminating a user session, the request containing a session ID for identifying a user session to be terminated, wherein the request for terminating the user session is carreid by a message of Abort-Session-Request, ASR; and

Releasing, by a device for terminating user sessions, the network resources occupied by the user session corresponding to the session ID contained in the request, sending back (217) to the multicast service device a response of the request for terminating the user session, wherein the response of the request for terminating the user session is carried by a message of Abort-Session-Answer, ASA.

In the above solution, before initiating the request for terminating a user session, the method may further include: for each user terminal, obtaining a termination condition for terminating the user terminal's user session, determining whether the termination condition is met, and if yes, initiating the request for terminating a user session.

In the above solution, the termination condition may be that the current service value is equal to or more than the allowable service value.

In the above solution, if the service value is the amount of the Multicast Service Keys (MSKs) sent to the user terminal, the termination condition is that the current amount of the MSKs sent to the user terminal is equal to or more than the maximum amount of the MSKs that could be sent to the user terminal; and if the service value is the duration of transmitting multicast data to the user terminal, the termination condition is that the current duration of transmitting multicast data to the user terminal is equal to or more than the maximum duration of transmitting multicast data to the user terminal.

In the above solution, if the service value is the amount of the MSKs sent to the user terminal and the allowable service value is the maximum duration of transmitting multicast data to the user terminal, the termination condition is that the current amount of the MSKs sent to the user terminal is equal to or more than the maximum amount of the MSKs converted from the maximum duration of transmitting multicast data to the user terminal.

In the above solution, the termination condition may be that the user terminal's time limit for subscribed multicast service has expired.

In the above solution, the termination condition that the user terminal's time limit for subscribed multicast service has expired may include: the amount of the MSKs sent to the user terminal is equal to or more than the maximum amount of the MSKs sent to the user terminal converted from the time limit for subscribed multicast service.

In the above solution, the termination condition may be that a message for requesting to terminate a user session from an online command system has been received.

In the above solution, the termination condition may include: the current service value being equal to or more than the allowable service value of the user terminal, the user terminal's time limit for subscribed multicast service having expired, or a message for requesting to terminate a user session of the user terminal from an Online Command System having been received; or a casual combination of the three; and wherein determining whether the termination condition is met may include: determining whether any condition included in the termination condition is met, if any of the conditions included in the termination condition has been satisfied, confirming the termination condition is met.

The method further includes: on receiving a message for joining a multicast group from a user terminal, the GGSN sends (203) an Authentication and Authorization Request, AAR, message containing a session ID to the BM-SC, wherein the session ID is for the user terminal that initiates the message for joining the multicast group;
the BM-SC obtained and recording (204) the session ID of the user terminal contained in the AAR message;
the BM-SC sending (216) to the GGSN a request for terminating the user session, wherein the session ID of the user terminal is contained into the request for terminating the user session.

The method further includes: upon receiving a multicast service request from a user terminal, setting up a multicast transmitting channel between the user terminal and a multicast service device, and obtaining an allowable service value; sending multicast data corresponding to the multicast service request from the multicast service device to the user terminal, and obtaining a current multicast service value dynamically; and comparing the current service value with the obtained allowable service value, if the current service value is equal to or more than the allowable service value, terminating the current transmitting.

A multicast service device is provided according to the present invention, including: a unit for determining session termination conditions and a unit for initiating session termination, wherein: the unit for determining session termination conditions is for determining whether a user terminal has satisfied its termination condition for a user session, and if the termination condition for a user session has been satisfied, outputting an instruction of session termination to the unit for initiating session termination; and the unit for initiating session termination is for initiating a request for termination a user session including a session ID when receiving the instruction of session termination, wherein the request for terminating the user session is carried by a message of Abort-Session-Request, ASR.

In the above solution, the multicast service device may further include: a configuration unit for receiving configuration information, for each user terminal, generating a termination condition for a user session, and configuring a termination condition for a user session to the unit for determining session termination conditions.

A device for terminating user sessions is also provided according to the present invention, including: a unit for receiving requests and a unit for terminating sessions, wherein: the unit for receiving requests is for receiving a request for terminating a user session which includes a session ID, and outputting an instruction containing the session ID to the unit for terminating sessions; and the unit for terminating sessions is for receiving the instruction from the unit for receiving requests, releasing the occupied network resources corresponding to the session ID contained in the instruction, and sending back (217) a response of the request for terminating the user session, wherein the response of the request for terminating the user session is carried by a message of Abort-Session-Answer, ASA.

This invention also provides a multicast service system which includes: a multicast service device, a device for terminating user sessions, and user terminals, wherein the multicast service device is for constructing a user session with each user terminal and transmitting multicast data to the user terminal, for each user terminal, the multicast service device is for determining whether the user terminal has satisfied its termination condition for a user session, and if the termination condition for a user session has been satisfied, sending a request for terminating a user session to the device for terminating user sessions which contains a session ID; and the device for terminating user sessions is for receiving the request for terminating a user session from the multicast service device, and releasing the occupied network resources corresponding to the session ID contained in the request.

The key of the present invention is that a multicast service device initiates a request for terminating a user session by a multicast service device, the request containing a session ID for identifying a user session to be terminated, and the network resources occupied by the user session corresponding to the session ID contained in the request is then released.

### Brief Description of the Drawings

Fig. 1 illustrates the architecture of a wireless network supporting the MBMS.
Fig. 2 illustrates a flowchart for initiating a process of terminating a user session by a BM-SC according to an embodiment of the present invention.

### Embodiments of the Invention

In reference to the figures and the exemplary embodiment, the present invention is explained in detail as follows.

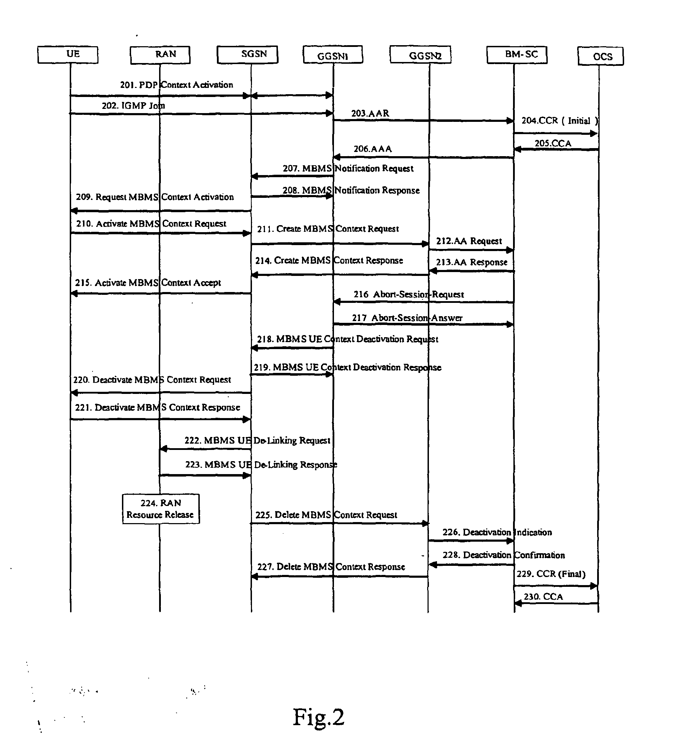

Fig. 2 illustrates a flowchart for initiating a process of terminating a user session by a BM-SC according to an embodiment of the present invention. The embodiment is implemented based on Internet Protocol version 4 (IPv4). And in the embodiment, the user equipment (UE) that originates a request for joining a multicast group is a prepaid user, the GGSN corresponding to the default Packet Data Protocol (PDP) context refers to GGSN1, and the GGSN actually providing the required MBMS service refers to GGSN2. In practical, GGSN1 and GGSN2 may be the same GGSN or different GGSNs.

Steps 201~202: Usually when a UE needs to activate a MBMS multicast service, it should interact with the network and establish a PDP Context, including: sending a PDP Context Activation message to the network. And then, through the established PDP Context, the current UE sends a message for joining a multicast group, e.g., an IGMP join message, to GGSN1. In this message for joining a multicast group, a service type requested by a user and user ID thereof are identified by an IP multicast address.

Step 203: On receiving a message for joining a multicast group from the UE, GGSN1 sends an Authentication and Authorization Request (AAR) message to a BM-SC. The AAR message contains a user ID, session ID, and service type requested, wherein the session ID is for the UE that initiates the request for joining a multicast group.

Step 204: Once the AAR message is authenticated, the BM-SC obtains and records the session ID of the UE initiating the request for joining a multicast group from the received AAR message, acquires the user ID from the AAR message also, and confirms the subscription information of the UE based on the acquired user ID. And then, according to the UE's subscription information and service type, the BM-SC determines that the UE is a prepaid user terminal. After that, the BM-SC sends an initiated Credit Control Request (CCR) message to an Online Charging System (OCS). The CCR message contains the UE's user ID, charging information of the multicast service, and information of starting charging, e.g., Tariff Time, where the charging information of the multicast service includes a program type or a program name, and the information of starting charging is for requesting charging credit values to the OCS.

Step 205: The OCS obtains the UE's user ID from the received CCR message, and based on the instruction of the time limit of charging and the UE's user ID to determine the UE's user credit limit. The OCS, based on the UE user credit limit and the multicast service charging information, calculates the UE's allowable service value and returns the allowable service value to the BM-SC via the Credit Control Answer (CCA) message. The allowable service value is used as a condition for terminating a user session.

The service value may be the amount of the MSKs sent to the UE by the BM-SC, or the duration by which the BM-SC sends the multicast data.

Step 206: the BM-SC stores the allowable service value received, and sends back an Authentication and Authorization Answer (AAA) message to GGSN1. That is a response message of successful authentication in the exemplary embodiment of the invention.

Steps 207~210: GGSN1 sends an MBMS Notification request to an SGSN. The SGSN sends an MBMS Notification response back to GGSN1. The response also includes a reason value which indicates whether the MBMS UE context is successfully activated. The SGSN sends the UE a Request MBMS Context Activation message. The message is for requesting the UE to activate an MBMS UE context. After establishing an MBMS UE context, the UE sends an Activate MBMS Context request to the SGSN which is for confirming the GGSN that can actually provide the required MBMS service. The GGSN confirmed is denoted as GGSN2 in the exemplary embodiment of the invention.

Steps 211~215: The SGSN establishes an MBMS UE context, and sends a Create MBMS Context request to GGSN2 which is the GGSN that can actually provide the required MBMS service. GGNS2 sends an MBMS AA Request to the BM-SC, seeking the authorization for the UE. The authorization result is provided in an MBMS AA Response from the BM-SC. GGSN2 creates an MBMS UE context and sends a Create MBMS Context Response to the SGSN. The SGSN sends to the UE an Activate MBMS Context Accept message including the MBMS bearing capacity.

At this time, the BM-SC starts the multicast service.

Step 216: During the process of sending the multicast data, the BM-SC monitors the service value for each UE receiving the multicast data, and determines if its current service value is equal to or more than the allowable service value, i.e. if the termination condition is met. If so, the BM-SC terminates the UE's current user session, including: sending to GGSN1 a request for terminating a user session, i.e., an Abort-Session-Request message, which contains the session ID used by the UE that meets the termination condition to direct GGSN1 to terminate the corresponding session. Otherwise, the BM-SC continues transmitting the multicast data.

If the service value is the amount of the MSKs sent by the BM-SC to the UE, the termination condition is that the current amount of the MSKs sent to the UE is equal to or more than the obtained maximum amount of the MSKs that the BM-SC could send to the UE, and the process of determining whether the UE's current service value is equal to or more than the allowable service value is as follows: determining whether the current amount of the MSKs sent to the UE is equal to or more than the obtained maximum amount of the MSKs. If so, the BM-SC sends GGSN1 a request for terminating that user session.

If the service value is the duration of sending multicast data, the termination condition is that the obtained maximum duration of sending multicast data has expired, and the process of determining whether the UE's current service value is equal to or more than the allowable service value is as follows: determining if the duration of sending multicast data has expired.

Since the duration of sending multicast data to the UE is related to the amount of the MSKs send to the UE, if the service value is the amount of the MSKs sent by the BM-SC to the UE, the acquired allowable service value may be the maximum duration of sending multicast data. Here, the termination condition is that the current amount of the MSKs sent to the UE is equal to or more than the maximum amount of the MSKs converted from the obtained maximum duration of sending multicast data, so the process of determining whether the UE's current service value is equal to or more than the allowable service value is as follows: the BM-SC first calculating the maximum amount of the MSKs that can be sent based on the obtained maximum duration of sending multicast data, and then, determining whether the current amount of the MSKs sent to the UE has already been equal to the calculated maximum amount of the MSKs.

If the termination condition is satisfied, the BM-SC stops sending MSKs to the UE. Thus, the UE will no longer be able to obtain an MSK to decrypt the received multicast data, which effectively terminates the user session of that UE.

Step 217: After receiving the request for terminating a user session, GGSN1 finds the corresponding user session, based on the session ID included in the request, releases the resources corresponding to the user session, and sends back the BM-SC a response of the request for terminating a user session.

The request for terminating a user session and the response thereof in the above Step 216 and Step 217 can be carried by, respectively, messages of Abort-Session-Request (ASR) and Abort-Session-Answer (ASA), or a Re-Auth-Request (RAR) and Re-Auth-Answer (RAA), or a Session-Termination-Request (STR) and Session-Termination-Answer (STA).

Steps 218~224: GGSN1 sends the SGSN an MBMS UE Context Deactivation Request for the UE that satisfies the termination condition. The request contains the UE's user ID. After sending back an MBMS UE Context Deactivation Response to GGSN1, the SGSN also sends an MBMS Context Deactivation Request to the UE. After deactivating the MBMS UE context, the UE sends back an MBMS Context Deactivation Response to the SGSN. The SGSN sends an MBMS UE De-Linking Request to the Radio Access Network (RAN) the UE belongs to. The request contains the UE's user ID. After releasing the resources occupied by the UE, the RAN sends back an MBMS UE De-Linking Response to the SGSN.

Steps 225~228: The SGSN sends GGSN2 a Delete MBMS Context Request. After receiving the request, GGSN2 sends a Deactivation Indication to the BM-SC. Upon confirming that the MBMS context has been deactivated, the BM-SC sends back a Deactivation Confirmation to GGSN2, and GGSN2 returns a Delete MBMS Context Response to the SGSN.

After the network releases the resources occupied by the UE, the BM-SC no longer send an MSK to the UE so as to terminate the UE's user session. If, at this stage, the BM-SC receives a message from the UE requesting an updated MSK, since the BM-SC can't find the UE's session ID, it will refuse sending an MSK to the UE. If the BM-SC further determines there is no UE in the current network receiving the multicast data, i.e., the UE whose user session has just been terminated is the last UE using the multicast service, the BM-SC will stop transmitting the multicast data to save network resources.

Steps 229~230: The BM-SC sends a final Credit Control Request (CCR) message to the Online Charging System (OCS). The CCR message contains the UE's id, the multicast service charging information, and the information of terminating charging which indicates to finish charging. The multicast service charging information includes a program type or a program name. On confirming finishing charging and conducting a real time billing for the UE, the OCS sends a Credit Control Answer (CCA) message back to the BM-SC.

Therefore, the network is able to initiate a termination of a user session for a single UE, and further accomplish real time charging.

In addition, another method for the network to initiate a termination of a user session for a single UE is as follows. After receiving a message from a UE for joining a multicast group, the BM-SC records the user ID and the time limit for subscribed multicast service. And then, the time limit of the multicast service is used in determining whether the UE's termination condition could be satisfied, wherein the time limit of the multicast service may be configured in the BM-SC when the service is generated, or obtained from the OCS, or acquired from other network entities based on identities of the current user and service. While sending the multicast data, the BM-SC determines whether the time limit of the UE has expired, i.e., whether the termination condition is met. If so, the BM-SC sends a request for terminating a user session to the GGSN. The request contains the UE's session ID. After receiving the request, the GGSN releases the resources occupied by the UE corresponding to the session ID, and sends back to the BM-SC a response of the request for terminating a user session. Otherwise, the BM-SC continues transmitting the multicast data. Of course, the time limit of the multicast service can be the maximum duration of sending multicast data, or the maximum amount of the MSKs sent to the UE converted from a duration of sending multicast data. Similarly, when the BM-SC determines that the current network has no more user terminal receiving the multicast data, it will stop sending the multicast data. The request for terminating a user session and the response thereof can be respectively carried by messages of ASR and ASA, or RAR and RAA, or STR and STA.

Another method for the network to initiate a termination of a user session for a single UE is as follows. In the process of a BM-SC sending multicast data, when the BM-SC receives a message for requesting to terminate the UE's user session including a particular UE's session ID from an Online Command System in an Operation Support System (OSS), the BM-SC sends a request for terminating a user session to the GGSN, including the UE's session ID. After receiving the request, the GGSN releases the resources occupied by the UE corresponding to the session ID, and sends back a response of the request for terminating a user session to the BM-SC. Therefore, the network is able to initiate a user session's termination for a particular UE. In this method, having received a message for requesting to terminate a user session of a single UE from the OSS is a termination condition. The procedure of determining if the termination condition is met is that determine whether it has received a message for requesting to terminate a user session for a UE from the OSS. Similarly after the BM-SC confirms that there is no more user terminals receiving the multicast data, it will stop transmitting the multicast data. The request for terminating a user session and the response thereof can also be carried respectively by messages of ASR and ASA, or RAR and RAA, or STR and STA.

The aforementioned three kinds of conditions in the determination can be used by itself alone or in any combination of two or three of them. The three conditions include: the user terminal's current service value being equal to or more than the obtained its allowable service value, the user terminal's time limit for subscribed multicast service having expired, or having received a message for requesting to terminate a user session of a single UE from the OSS, or a casual combination of the three. When multiple conditions are used together, the termination condition includes any two or three of them. And at this time, determining whether the termination condition is satisfied is as follows: deciding each condition included in the termination condition simultaneously, if any condition included in the termination condition has been satisfied, determine the whole termination condition has been met; and if no condition included in the termination condition could be satisfied, decide the whole termination condition has not been met. That is, the BM-SC may send a request for terminating a user session for a single UE as long as one condition is satisfied.

For example, the allowable service value obtained by a BM-SC from the OCS is the maximum duration of sending multicast data to the UE, and the maximum duration is 10 minutes. However, the BM-SC has obtained the UE's time limit for subscribed multicast service is 30 minutes based on the multicast service subscription information. When detecting the duration of sending multicast data to the UE is the specified time, 10 minutes, which is equal to the allowable service value, the BM-SC will send to a GGSN a request of terminating a user session for the UE including the UE's session ID, thereby implementing the network's initiating a termination of a particular user's session.

For another example, the allowable service value obtained by a BM-SC from the OCS is the maximum duration of sending multicast data to the UE, and the maximum duration is 10 minutes. When the duration of sending multicast data to UE by the BM-SC is 3 minutes, the BM-SC receives a message for requesting to terminate a particular UE's user session from the OSS. In this case, the BM-SC will immediately send a request for terminating the UE's user session to the GGSN so that the network can initiate a termination of a particular UE's user session.

Based on the method in accordance with the present invention, this invention also provides a multicast service device, the device includes: a unit for determining session termination conditions and a unit for initiating session termination.

The unit for determining session termination conditions is for determining whether a user terminal has satisfied its termination condition for a user session, and if the termination condition for a user session has been satisfied, outputting an instruction of session termination to the unit for initiating session termination; and the unit for initiating session termination is for initiating a request for termination a user session including a session ID when receiving the instruction of session termination so that the device that receives the request for termination a user session is able to terminate the corresponding user session to the request and release the resources of the corresponding user terminal.

In order to implement dynamic configuration of termination conditions for user sessions, the multicast service device may further include a configuration unit which is for receiving configuration information, for each user terminal, generating a termination condition for a user session, and configuring a termination condition for a user session to the unit for determining session termination conditions. So that, each user terminal's termination condition for a user session can be set dynamically according to practical circumstances. Here the multicast service device usually refers to a BM-SC.

In accordance with the present invention, a device for terminating user sessions is also provided, comprising: a unit for receiving requests and a unit for terminating sessions.

The unit for receiving requests is for receiving a request for terminating a user session which includes a session ID, and outputting an instruction containing the session ID to the unit for terminating sessions; and The unit for terminating sessions is for receiving the instruction from the unit for receiving requests, and releasing the occupied network resources corresponding to the session ID contained in the instruction. The device terminating user sessions is usually denoted as a GGSN.

The above-said multicast service device and device for terminating user sessions, and user terminals may construct a multicast service system. In this multicast service system, the multicast service device is for constructing a user session with each user terminal and transmitting multicast data to the user terminal; and for each user terminal, the multicast service device is further for determining whether the user terminal has satisfied its termination condition for a user session, and if the termination condition for a user session has been satisfied, sending a request for terminating a user session to the device for terminating user sessions which contains a session ID; and the device for terminating user sessions is for receiving the request for terminating a user session from the multicast service device, and releasing the occupied network resources corresponding to the session ID contained in the request.

In summary, the aforementioned examples are only the preferred embodiments of the invention which do not limit the scope of the present invention.

## Claims

1. A method for terminating a user session in a Multicast service, comprising:
initiating (216), by a Multicast service device, a request for terminating a user session, the request containing a session ID for identifying the user session to be terminate, wherein the request for terminating the user session is carried by a message of Abort-Session-Request, ASR; and
releasing, by a device for terminating user session, the network resources occupied by the user session corresponding to the session ID contained in the request, sending back (217) to the multicast service device a response of the request for terminating the user session, wherein the response of the request for terminating the user session is carried by a message of Abort-Session-Answer, ASA.

2. The method as claimed in Claim 1, wherein before initiating the request for terminating a user session, the method further comprises:
for each user terminal, obtaining a termination condition for terminating the user terminal's user session, determining whether the termination, condition is met, and if yes, initiating the request for terminating a user session.

3. The method as claimed in Claim 2, wherein the termination condition is that the current service value is equal to or more than the allowable service value.

4. The method as claimed in Claim 3, wherein obtaining of the allowable service value comprises:
on receiving a message for joining a multicast group from the user terminal, obtaining a user ID from the received message and recording;
confirming the user terminal is a prepaid subscriber based on the obtained user ID, and acquiring the allowable service value of the user terminal from an Online Charging System, OCS.

5. The method as claimed in Claim 4, wherein acquiring the allowable service value of the user terminal from an Online Charging System comprises:
sending a Credit Control Request, CCR, message to the Online Charging System by the multicast service device, where the CCR message contains the user ID and multicast service charging information;
the Online Charging System determining the credit value limit of the user terminal based on the user ID, calculating the allowable service value based on the credit value limit and the multicast service charging information, and transmitting the allowable service value to the multicast service device.

6. The method as claimed in Claim 5, wherein the multicast service charging information is a program type or a program name.

7. The method as claimed in Claim 3, wherein if the service value is the amount of the Multicast Service Keys, MSKs, sent to the user terminal, the termination condition is that the current amount of the MSKs sent to the user terminal is equal to or more than the maximum amount of the MSKs that could be sent to the user terminal; and
if the service value is the duration of transmitting multicast data to the user terminal, the termination condition is that the current duration of transmitting multicast data to the user terminal is equal to or more than the maximum duration of transmitting multicast data to the user terminal.

8. The method as claimed in Claim 7, wherein if the service value is the amount of the MSKs sent to the user terminal and the allowable service value is the maximum duration of transmitting multicast data to the user terminal, the termination condition is that the current amount of the MSKs sent to the user terminal is equal to or more than the maximum amount of the MSKs converted from the maximum duration of transmitting multicast data to the user terminal.

9. The method as claimed in Claim 2, wherein the termination condition is that the user terminal's time limit for subscribed multicast service has expired.

10. The method as claimed in Claim 9, wherein the termination condition that the user terminal's time limit for subscribed multicast service has expired comprises: the amount of the MSKs sent to the user terminal is equal to or more than the maximum amount of the MSKs sent to the user terminal converted from the time limit for subscribed multicast service.

11. The method as claimed in Claim 9, wherein the time limit for subscribed multicast service by the user terminal is obtained by taking the following steps :
on receiving a message for joining a multicast group from the user terminal, the multicast service device recording the user ID of the user terminal, and the time limit for subscribed multicast service by the user terminal.

12. The method as claimed in Claim 2, wherein the termination condition is that a message for requesting to terminate a user session from an online command system has been received.

13. The method as claimed in Claim 2, wherein the termination condition comprise:
the current service value being equal to the allowable service value of the user terminal, the user terminal's time limit for subscribed multicast service having expired, or a message for requesting to terminate a user session of the user terminal from an Online Command System having been received; or a casual combination of the three; and
wherein determining whether the termination condition is met comprises: determining whether any condition included in the termination condition is met, if any of the conditions included in the termination condition has been satisfied, confirming the termination condition is met.

14. The method as claimed in Claim 1, further comprising: on receiving the response, the multicast service device determining whether there is any other user terminal of the current multicast service in the network, if yes, continuing transmitting the multicast data; otherwise, terminating the transmitting.

15. The method as claimed in Claim 1, wherein the multicast service device is denoted as a Broadcast / Multicast Service Center, BM-SC, and the device that releases the network resources is denoted as a Gateway General Package Radio Service, GPRS Support Node, GGSN.

16. The method as claimed in Claim 15, wherein releasing the network resources is denoted as a network entity releasing the network resources based on the notification from the GGSN.

17. The method as claimed in Claim 16, wherein the network entity releasing the network resources is a Serving GPRS Support Node, SGSN.

18. The method as claimed in Claim 1, wherein the network entity which releases the network resources is denoted as an SGSN.

19. The method as claimed in Claim 15, further comprising: on receiving a message for joining a multicast group from a user terminal, the GGSN sends (203) an Authentication and Authorization Request, AAR, message containing a session ID to the BM-SC, wherein the session ID is for the user terminal that initiates the message for joining the multicast group;
the BM-SC obtaining and recording (204) the session ID of the user terminal contained in the AAR message;
the BM-SC sending (216) to the GGSN a request for terminating the user session, wherein the session ID of the user terminal is contained in the request for terminating the user session.

20. The method as claimed in Claim 1, wherein before initiating the request for terminating a user session, the method further comprises:
upon receiving a multicast service request from a user terminal, setting up a multicast transmitting channel between the user terminal and a multicast service device, and obtaining an allowable service value;
sending multicast data corresponding to the multicast service request from the multicast service device to the user terminal and obtaining a current multicast service value dynamically;
comparing the current service value with the obtained allowable service value, if the current service value is equal to or more than the allowable service value, initiating the request for terminating the user session.

21. The method as claimed in Claim 20, wherein obtaining the allowable service value comprises
on receiving a message of joining a multicast group from the user terminal, the multicast service device obtaining a user ID from the received message and recording the user ID;
after confirming the user terminal is a prepaid subscriber based on the user ID, the multicast service device obtaining the allowable service value of the user terminal from an Online Charging System.

22. The method as claimed in Claim 21, wherein the multicast service device obtaining the allowable service value of the user terminal from an Online Charging System comprises:
sending a Credit Control Request message to the Online Charging System by the multicast service device, where the CCR message contains the user ID and the multicast service charging information;
the Online Charging System determining the credit value limit of the user terminal based on the user ID, calculating the allowable service value based on the credit value limit and the multicast service charging information of the user terminal, and transmitting the allowable service value to the multicast service device.

23. The method as claimed in Claim 20, wherein if the service value is the amount of the MSKs sent to the user terminal, the allowable service value is the maximum amount of the MSKs that could be sent to the user terminal; and
if the service value is the duration of transmitting multicast data to the user terminal, the allowable service value is the maximum duration of transmitting multicast data to the user terminal.

24. The method as claimed in Claim 23, wherein if the service value is the amount of the MSKs sent to the user terminal, the allowable service value is the maximum duration of transmitting multicast data to the user terminal, and
the current service value being equal to the allowable service value is that the current amount of the MSKs sent to the user terminal is equal to or more than the maximum amount of the MSKs converted from the maximum duration of transmitting Multicast data to the user terminal.

25. The method as claimed in Claim 24, further comprising: sending a response of the request for terminating the user session back to the multicast service device.

26. The method as claimed in Claim 25, further comprising: on receiving the response of the request for terminating the user session, the multicast service device determining if there is any other user terminal of the multicast service in the network, of yes, continuing transmitting the multicast data, otherwise, terminating the transmitting.

27. The method as claimed in Claim 25, wherein the request for terminating the user session is carried by a message of Abort-Session-Request, RAR, or STR; and
accordingly, the response of the request for terminating the user session, transmitted back to the multicast service device is carried by a message of Abort-Session-Answer, RAA, or STA.

28. The method as claimed in Claim 19, wherein the multicast service device is denoted as a Broadcast / Multicast Service Center (BM-SC), and the device which releases the network resources is denoted as a Gateway GPRS Support Node, GGSN.

29. The method as claimed in Claim 28, wherein releasing the network resources is denoted as a network entity releasing the network resources based on the notification from the GGSN.

30. The method as claimed in Claim 29, wherein the network entity is a Serving GPRS Support Node, SGSN.

31. The method as claimed in Claim 19, wherein the network entity which releases the network resources is denoted as an SGSN.

32. A multicast service device, comprising: a unit for determining session termination conditions and a unit for initiating session termination, wherein:
the unit for determining session termination conditions is for determining whether a user terminal has satisfied its termination condition for a user session, and if the termination condition for a user session has been satisfied, outputting an instruction of session termination to the unit for initiating session termination; and
the unit for initiating session termination is for initiating a request for terminating a user session including a session ID when receiving the instruction of session termination, wherein the request for terminating the user session is carried by a message of Abort-Session-Request, ASR.

33. The device as claimed in Claim 32, further comprising:
a configuration unit for receiving configuration information, for each user terminal, generating a termination condition for a user session, and configuring a termination condition for a user session to the unit for determining session termination conditions.

34. The device as claimed in Claims 32 or 33, wherein the device is denoted as a BM-SC.

35. A device for terminating user sessions, comprising: a unit for receiving requests and a unit for terminating sessions, wherein:
the unit for receiving requests is for receiving a request for terminating a user session which includes a session ID, and outputting an instruction containing the session ID to the unit for terminating sessions; and
the unit for terminating sessions is for receiving the instruction from the unit for receiving requests, and releasing the occupied network resources corresponding to the session ID contained in the instruction, and sending back (217) a response of the request for terminating the user session, wherein the response of the request for terminating the user session is carried by a message of Abort-Session-Answer, ASA.

36. The device as claimed in Claim 35, wherein the device is denoted as a GGSN.

37. A multicast service system, comprising: a multicast service device being as defined in Claim 34 and a device for terminating user sessions being as defined in Claim 37;
wherein:
the multicast service device is for sending a request for terminating a user session to the device for terminating user sessions which contains a session ID when the termination condition for a user session has been satisfied; and
the device for terminating user sessions is for receiving the requests for terminating a user session from the multicast service device, and releasing the occupied network resources corresponding to the session ID contained in the request.

38. The system as claimed in Claim 37, wherein the multicast service device is denoted as a BM-SC, and the device for terminating user sessions is denoted as a GGSN.

## Patentansprüche

1. Verfahren zum Beenden einer Benutzersitzung in einem Gruppenrufdienst, das Folgendes umfasst:
Einleiten (216) durch eine Gruppenrufdienstvorrichtung einer Anforderung zum Beenden einer Benutzersitzung, wobei die Anforderung eine Sitzungs-ID zum Identifizieren der zu beendenden Benutzersitzung enthält, wobei die Anforderung zum Beenden der Benutzersitzung durch eine Sitzungsabbruchanforderungsnachricht, ASR-Nachricht, übertragen wird; und
Freigeben durch eine Vorrichtung zum Beenden einer Benutzersitzung der durch die Benutzersitzung, die der in der Anforderung enthaltenen Sitzungs-ID entspricht, in Anspruch genommenen Netzbetriebsmittel, Zurücksenden (217) an die Gruppenrufdienstvorrichtung einer Antwort auf die Anforderung zum Beenden der Benutzersitzung, wobei die Antwort auf die Anforderung zum Beenden der Benutzersitzung durch eine Sitzungsabbruchantwortnachricht, ASA-Nachricht, übertragen wird.

2. Verfahren nach Anspruch 1, wobei vor dem Einleiten der Anforderung zum Beenden einer Benutzersitzung das Verfahren ferner Folgendes umfasst:
für jedes Benutzerendgerät Erhalten einer Beendigungsbedingung zum Beenden der Benutzersitzung des Benutzerendgeräts, Bestimmen, ob die Beendigungsbedingung erfüllt ist, und, falls ja, Einleiten der Anforderung zum Beenden einer Benutzersitzung.

3. Verfahren nach Anspruch 2, wobei die Beendigungsbedingung darin besteht, dass der momentane Dienstwert gleich oder größer als der zulässige Dienstwert ist.

4. Verfahren nach Anspruch 3, wobei das Erhalten des zulässigen Dienstwertes Folgendes umfasst:
beim Empfangen einer Nachricht zum Beitreten zu einer Gruppenrufgruppe von dem Benutzerendgerät Erhalten einer Benutzer-ID von der empfangenen Nachricht und Aufzeichnen;
Bestätigen basierend auf der erhaltenen Benutzer-ID, dass das Benutzerendgerät ein Prepaid-Teilnehmer ist, und Erfassen des zulässigen Dienstwertes des Benutzerendgeräts von einem Online-Gebührenberechnungssystem OCS.

5. Verfahren nach Anspruch 4, wobei das Erfassen des zulässigen Dienstwertes des Benutzerendgeräts von einem Online-Gebührenberechnungssystem Folgendes umfasst:
Senden einer Kreditsteuerungsanforderungs-Nachricht, CCR-Nachricht, an das Online-Gebührenberechnungssystem durch die Gruppenrufdienstvorrichtung, wobei die CCR-Nachricht die Benutzer-ID und die Gruppenrufdienst-Gebührenberechnungsinformationen enthält;
Bestimmen durch das Online-Gebührenberechnungssystem der Kreditwertgrenze des Benutzerendgeräts basierend auf der Benutzer-ID, Berechnen des zulässigen Dienstwertes basierend auf der Kreditwertgrenze und den Gruppenrufdienst-Gebührenberechnungsinformationen und Senden des zulässigen Dienstwertes an die Gruppenrufdienstvorrichtung.

6. Verfahren nach Anspruch 5, wobei die Gruppenrufdienst-Gebührenberechnungsinformationen ein Programmtyp oder ein Programmname sind.

7. Verfahren nach Anspruch 3, wobei, falls der Dienstwert die Menge der an das Benutzerendgerät gesendeten Gruppenrufdienstschlüssel MSKs ist, die Beendigungsbedingung ist, dass die momentane Menge der an das Benutzerendgerät gesendeten MSKs gleich der oder größer als die maximale Menge der MSKs ist, die an das Benutzerendgerät gesendet werden könnten; und
falls der Dienstwert die Dauer des Sendens der Gruppenrufdaten an das Benutzerendgerät ist, die Beendigungsbedingung ist, dass die momentane Dauer des Sendens der Gruppenrufdaten an das Benutzerendgerät gleich der oder größer als die maximale Dauer des Sendens der Gruppenrufdaten an das Benutzerendgerät ist.

8. Verfahren nach Anspruch 7, wobei, falls der Dienstwert die Menge der an das Benutzerendgerät gesendeten MSKs ist und der zulässige Dienstwert die maximale Dauer des Sendens der Gruppenrufdaten an das Benutzerendgerät ist, die Beendigungsbedingung ist, dass die momentane Menge der an das Benutzerendgerät gesendeten MSKs gleich der oder größer als die maximale Menge der MSKs ist, die aus der maximalen Dauer des Sendens der Gruppenrufdaten an das Benutzerendgerät umgesetzt worden ist.

9. Verfahren nach Anspruch 2, wobei die Beendigungsbedingung ist, dass die Zeitgrenze des Benutzerendgeräts für einen abonnierten Gruppenrufdienst abgelaufen ist.

10. Verfahren nach Anspruch 9, wobei die Beendigungsbedingung, dass die Zeitgrenze des Benutzerendgeräts für einen abonnierten Gruppenrufdienst abgelaufen ist, Folgendes umfasst: dass die Menge der an das Benutzerendgerät gesendeten MSKs gleich der oder größer als die maximale Menge der an das Benutzerendgerät gesendeten MSKs ist, die aus der Zeitgrenze für den abonnierten Gruppenrufdienst umgesetzt worden ist.

11. Verfahren nach Anspruch 9, wobei die Zeitgrenze für den durch das Benutzerendgerät abonnierten Gruppenrufdienst erhalten wird, indem die folgenden Schritte unternommen werden:
beim Empfangen einer Nachricht zum Beitreten zu einer Gruppenrufgruppe von dem Benutzerendgerät Aufzeichnen der Benutzer-ID des Benutzerendgeräts und der Zeitgrenze für den durch das Benutzerendgerät abonnierten Gruppenrufdienst durch die Gruppenrufdienstvorrichtung.

12. Verfahren nach Anspruch 2, wobei die Beendigungsbedingung ist, dass eine Nachricht zum Anfordern, eine Benutzersitzung zu beenden, von einem Online-Befehlssystem empfangen worden ist.

13. Verfahren nach Anspruch 2, wobei die Beendigungsbedingung Folgendes umfasst:
dass der momentane Dienstwert gleich dem zulässigen Dienstwert des Benutzerendgeräts ist, die Zeitgrenze des Benutzerendgeräts für den abonnierten Gruppenrufdienst abgelaufen ist oder eine Nachricht zum Anfordern, eine Benutzersitzung des Benutzerendgeräts zu beenden, von einem Online-Befehlssystem empfangen worden ist; oder eine zufällige Kombination der drei; und
wobei das Bestimmen, ob die Beendigungsbedingung erfüllt ist, Folgendes umfasst: Bestimmen, ob irgendeine Bedingung, die in der Beendigungsbedingung enthalten ist, erfüllt ist, und, falls irgendeine der in der Beendigungsbedingung enthaltenen Bedingungen erfüllt worden ist, Bestätigen, dass die Beendigungsbedingung erfüllt ist.

14. Verfahren nach Anspruch 1, das ferner Folgendes umfasst: beim Empfangen der Antwort Bestimmen durch die Gruppenrufdienstvorrichtung, ob es irgendein weiteres Benutzerendgerät des momentanen Gruppenrufdienstes in dem Netz gibt, und, falls ja, Fortsetzen des Sendens der Gruppenrufdaten; andernfalls Beenden des Sendens.

15. Verfahren nach Anspruch 1, wobei die Gruppenrufdienstvorrichtung als ein Rundfunk-/Gruppenrufdienstzentrum BM-SC bezeichnet wird und die Vorrichtung, die die Netzbetriebsmittel freigibt, als ein Gateway-Unterstützungsknoten des allgemeinen Paketfunkdienstes, Gateway-GPRS-Unterstützungsknoten GGSN bezeichnet wird.

16. Verfahren nach Anspruch 15, wobei das Freigeben der Netzbetriebsmittel als eine Netz-Entität bezeichnet wird, die die Netzbetriebsmittel basierend auf der Meldung von dem GGSN freigibt.

17. Verfahren nach Anspruch 16, wobei die Netz-Entität, die die Netzbetriebsmittel freigibt, ein dienender GPRS-Unterstützungsknoten SGSN ist.

18. Verfahren nach Anspruch 1, wobei die Netz-Entität, die die Netzbetriebsmittel freigibt, als ein SGSN bezeichnet wird.

19. Verfahren nach Anspruch 15, das ferner Folgendes umfasst: beim Empfangen einer Nachricht zum Beitreten zu einer Gruppenrufgruppe von einem Benutzerendgerät Senden (203) durch den GGSN einer Authentifizierungs- und Autorisierungsanforderungsnachricht, AAR-Nachricht, die eine Sitzungs-ID enthält, an das BM-SC, wobei die Sitzungs-ID für das Benutzerendgerät ist, das die Nachricht zum Beitreten zu der Gruppenrufgruppe einleitet;
Erhalten und Aufzeichnen (204) durch das BM-SC der Sitzungs-ID des Benutzerendgeräts, die in der AAR-Nachricht enthalten ist;
Senden (216) durch das BM-SC einer Anforderung zum Beenden der Benutzersitzung an den GGSN, wobei die Sitzungs-ID des Benutzerendgeräts in der Anforderung zum Beenden der Benutzersitzung enthalten ist.

20. Verfahren nach Anspruch 1, wobei vor dem Einleiten der Anforderung zum Beenden einer Benutzersitzung das Verfahren ferner Folgendes umfasst:
beim Empfangen einer Gruppenrufdienstanforderung von einem Benutzerendgerät Aufbauen eines Gruppenrufsendekanals zwischen dem Benutzerendgerät und einer Gruppenrufdienstvorrichtung und Erhalten eines zulässigen Dienstwertes;
Senden der Gruppenrufdaten, die der Gruppenrufdienstanforderung entsprechen, von der Gruppenrufdienstvorrichtung an das Benutzerendgerät und dynamisches Erhalten eines momentanen Gruppenrufdienstwertes;
Vergleichen des momentanen Dienstwertes mit dem erhaltenen zulässigen Dienstwert, und, falls der momentane Dienstwert gleich dem oder größer als der zulässige Dienstwert ist, Einleiten der Anforderung zum Beenden der Benutzersitzung.

21. Verfahren nach Anspruch 20, wobei das Erhalten des zulässigen Dienstwertes Folgendes umfasst:
beim Empfangen einer Nachricht zum Beitreten zu einer Gruppenrufgruppe von dem Benutzerendgerät Erhalten einer Benutzer-ID von der empfangenen Nachricht und Aufzeichnen der Benutzer-ID durch die Gruppenrufdienstvorrichtung;
nach dem Bestätigen basierend auf der Benutzer-ID, dass das Benutzerendgerät ein Prepaid-Teilnehmer ist, Erhalten des zulässigen Dienstwertes des Benutzerendgeräts von einem Online-Gebührenberechnungssystem durch die Gruppenrufdienstvorrichtung.

22. Verfahren nach Anspruch 21, wobei das Erhalten des zulässigen Dienstwertes des Benutzerendgeräts von einem Online-Gebührenberechnungssystem durch die Gruppenrufdienstvorrichtung Folgendes umfasst:
Senden einer Kreditsteuerungsanforderungs-Nachricht an das Online-Gebührenberechnungssystem durch die Gruppenrufdienstvorrichtung, wobei die CCR-Nachricht die Benutzer-ID und die Gruppenrufdienst-Gebührenberechnungsinformationen enthält;
Bestimmen durch das Online-Gebührenberechnungssystem der Kreditwertgrenze des Benutzerendgeräts basierend auf der Benutzer-ID, Berechnen des zulässigen Dienstwertes basierend auf der Kreditwertgrenze und den Gruppenrufdienst-Gebührenberechnungsinformationen des Benutzerendgeräts und Senden des zulässigen Dienstwertes an die Gruppenrufdienstvorrichtung.

23. Verfahren nach Anspruch 20, wobei, falls der Dienstwert die Menge der an das Benutzerendgerät gesendeten MSKs ist, der zulässige Dienstwert die maximale Menge der MSKs ist, die an das Benutzerendgerät gesendet werden könnten; und falls der Dienstwert die Dauer des Sendens der Gruppenrufdaten an das Benutzerendgerät ist, der zulässige Dienstwert die maximale Dauer des Sendens der Gruppenrufdaten an das Benutzerendgerät ist.

24. Verfahren nach Anspruch 23, wobei, falls der Dienstwert die Menge der an das Benutzerendgerät gesendeten MSKs ist, der zulässige Dienstwert die maximale Dauer des Sendens der Gruppenrufdaten an das Benutzerendgerät ist, und
der momentane Dienstwert, der gleich dem zulässigen Dienstwert ist, ist, dass die momentane Menge der an das Benutzerendgerät gesendeten MSKs gleich der oder größer als die maximale Menge der MSKs ist, die aus der maximalen Dauer des Sendens der Gruppenrufdaten an das Benutzerendgerät umgesetzt worden ist.

25. Verfahren nach Anspruch 24, das ferner Folgendes umfasst: Senden einer Antwort auf die Anforderung zum Beenden der Benutzersitzung zurück zur Gruppenrufdienstvorrichtung.

26. Verfahren nach Anspruch 25, das ferner Folgendes umfasst: beim Empfangen der Antwort auf die Anforderung zum Beenden der Benutzersitzung Bestimmen durch die Gruppenrufdienstvorrichtung, ob es irgendwelche weiteren Benutzerendgeräte des Gruppenrufdienstes in dem Netz gibt, und, falls ja, Fortsetzen des Sendens der Gruppenrufdaten; andernfalls Beenden des Sendens.

27. Verfahren nach Anspruch 25, wobei die Anforderung zum Beenden der Benutzersitzung durch eine Sitzungsabbruchanforderungsnachricht, RAR-Nachricht, oder STR übertragen wird; und
demgemäß die Antwort auf die Anforderung zum Beenden der Benutzersitzung, die zurück zur Gruppenrufdienstvorrichtung gesendet wird, durch eine Sitzungsabbruchantwortnachricht, RAA-Nachricht, oder STA übertragen wird.

28. Verfahren nach Anspruch 19, wobei die Gruppenrufdienstvorrichtung als ein Rundfunk-/Gruppenrufdienstzentrum (BM-SC) bezeichnet wird und die Vorrichtung, die die Netzbetriebsmittel freigibt, als ein Gateway-GPRS-Unterstützungsknoten GGSN bezeichnet wird.

29. Verfahren nach Anspruch 28, wobei das Freigeben der Netzbetriebsmittel als eine Netz-Entität bezeichnet wird, die die Netzbetriebsmittel basierend auf der Meldung von dem GGSN freigibt.

30. Verfahren nach Anspruch 29, wobei die Netz-Entität ein dienender GPRS-Unterstützungsknoten SGSN ist.

31. Verfahren nach Anspruch 19, wobei die Netz-Entität, die die Netzbetriebsmittel freigibt, als ein SGSN bezeichnet wird.

32. Gruppenrufdienstvorrichtung, die Folgendes umfasst: eine Einheit zum Bestimmen der Sitzungsbeendigungsbedingungen und eine Einheit zum Einleiten der Sitzungsbeendigung, wobei:
die Einheit zum Bestimmen der Sitzungsbeendigungsbedingungen dazu dient, zu bestimmen, ob ein Benutzerendgerät seine Beendigungsbedingung für eine Benutzersitzung erfüllt hat, und, falls die Beendigungsbedingung für eine Benutzersitzung erfüllt worden ist, einen Befehl für die Sitzungsbeendigung an die Einheit zum Einleiten der Sitzungsbeendigung auszugeben; und
die Einheit zum Einleiten der Sitzungsbeendigung dazu dient, eine Anforderung zum Beenden einer Benutzersitzung, die eine Sitzungs-ID enthält, einzuleiten, wenn sie den Befehl für die Sitzungsbeendigung empfängt, wobei die Anforderung zum Beenden der Benutzersitzung durch eine Sitzungsabbruchanforderungsnachricht, ASR-Nachricht, übertragen wird.

33. Vorrichtung nach Anspruch 32, die ferner Folgendes umfasst:
eine Konfigurationseinheit zum Empfangen der Konfigurationsinformationen, die für jedes Benutzerendgerät eine Beendigungsbedingung für eine Benutzersitzung erzeugt und eine Beendigungsbedingung für eine Benutzersitzung für die Einheit zum Bestimmen der Sitzungsbeendigungsbedingungen konfiguriert.

34. Vorrichtung nach Anspruch 32 oder 33, wobei die Vorrichtung als ein BM-SC bezeichnet wird.

35. Vorrichtung zum Beenden von Benutzersitzungen, die Folgendes umfasst: eine Einheit zum Empfangen von Anforderungen und eine Einheit zum Beenden von Sitzungen, wobei:
die Einheit zum Empfangen von Anforderungen zum Empfangen einer Anforderung zum Beenden einer Benutzersitzung, die eine Sitzungs-ID enthält, und zum Ausgeben eines Befehls, der die Sitzungs-ID enthält, an die Einheit zum Beenden von Sitzungen dient; und
die Einheit zum Beenden von Sitzungen zum Empfangen des Befehls von der Einheit zum Empfangen von Anforderungen und zum Freigeben der in Anspruch genommenen Netzbetriebsmittel, die der in dem Befehl enthaltenen Sitzungs-ID entsprechen, und zum Zurücksenden (217) einer Antwort auf die Anforderung zum Beenden der Benutzersitzung dient, wobei die Antwort auf die Anforderung zum Beenden der Benutzersitzung durch eine Sitzungsabbruchantwortnachricht, ASA-Nachricht, übertragen wird.

36. Vorrichtung nach Anspruch 35, wobei die Vorrichtung als ein GGSN bezeichnet wird.

37. Gruppenrufdienstsystem, das Folgendes umfasst: eine Gruppenrufdienstvorrichtung nach Anspruch 34 und eine Vorrichtung zum Beenden von Benutzersitzungen nach Anspruch 37;
wobei:
die Gruppenrufdienstvorrichtung zum Senden einer Anforderung zum Beenden einer Benutzersitzung an die Vorrichtung zum Beenden von Benutzersitzungen dient, die eine Sitzungs-ID enthält, wenn die Beendigungsbedingung für eine Benutzersitzung erfüllt worden ist; und
die Vorrichtung zum Beenden von Benutzersitzungen zum Empfangen der Anforderung zum Beenden einer Benutzersitzung von der Gruppenrufdienstvorrichtung und zum Freigeben der in Anspruch genommenen Netzbetriebsmittel, die der in der Anforderung enthaltenen Sitzungs-ID entsprechen, dient.

38. System nach Anspruch 37, wobei die Gruppenrufdienstvorrichtung als ein BM-SC bezeichnet wird und die Vorrichtung zum Beenden von Benutzersitzungen als ein GGSN bezeichnet wird.

## Revendications

1. Procédé de terminaison d'une session d'utilisateur dans un service de multidiffusion, comprenant :
l'émission (216), par un dispositif de service de multidiffusion, d'une requête de terminaison de session d'utilisateur, la requête contenant une ID de session pour identifier la session d'utilisateur à terminer, la requête de terminaison de la session d'utilisateur étant acheminée par un message de Requête d'Abandon de Session, ASR ; et
la libération, par un dispositif de terminaison de session d'utilisateur, des ressources de réseau occupées par la session d'utilisateur correspondant à l'ID de session contenue dans la requête, le renvoi (217) au dispositif de service de multidiffusion d'une réponse à la requête de terminaison de la session d'utilisateur, la réponse à la requête de terminaison de la session d'utilisateur étant acheminée par un message de Réponse d'Abandon de Session, ASA.

2. Procédé selon la revendication 1, comprenant en outre avant l'émission de la requête de terminaison de session d'utilisateur :
pour chaque terminal utilisateur, l'obtention d'une condition de terminaison pour terminer la session d'utilisateur du terminal utilisateur, la détermination que la condition de terminaison est satisfaite ou non, et dans l'affirmative, l'émission de la requête de terminaison de session d'utilisateur.

3. Procédé selon la revendication 2, dans lequel la condition de terminaison est que la valeur de service actuelle soit égale ou supérieure à la valeur de service admissible.

4. Procédé selon la revendication 3, dans lequel l'obtention de la valeur de service admissible comprend :
à la réception d'un message d'intégration à un groupe de multidiffusion depuis le terminal utilisateur, l'obtention d'une ID d'utilisateur à partir du message reçu et l'enregistrement ;
la confirmation que le terminal utilisateur est un abonné ayant effectué un prépaiement en fonction de l'ID d'utilisateur obtenue, et l'acquisition de la valeur de service admissible du terminal utilisateur à partir d'un Système de Facturation en Ligne, OCS.

5. Procédé selon la revendication 4, dans lequel l'acquisition de la valeur de service admissible du terminal utilisateur à partir d'un Système de Facturation en Ligne comprend :
l'envoi d'un message de Requête de Contrôle de Crédit, CCR, au Système de Facturation en Ligne par le dispositif de service de multidiffusion, le message CCR contenant l'ID d'utilisateur et des informations de facturation de service de multidiffusion ;
par le Système de Facturation en Ligne, la détermination de la limite de valeur de crédit du terminal utilisateur en fonction de l'ID d'utilisateur, le calcul de la valeur de service admissible en fonction de la limite de valeur de crédit et des informations de facturation de service de multidiffusion, et la transmission de la valeur de service admissible au dispositif de service de multidiffusion.

6. Procédé selon la revendication 5, dans lequel les informations de facturation de service de multidiffusion sont un type de programme ou un nom de programme.

7. Procédé selon la revendication 3, dans lequel si la valeur de service est la quantité des Clés de Service de Multidiffusion, MSK, envoyées au terminal utilisateur, la condition de terminaison est que la quantité actuelle de MSK envoyées au terminal utilisateur soit égale ou supérieure à la quantité maximum des MSK qui pourraient être envoyées au terminal utilisateur ; et
si la valeur de service est la durée de transmission de données de multidiffusion au terminal utilisateur, la condition de terminaison est que la durée actuelle de transmission de données de multidiffusion au terminal utilisateur soit égale ou supérieure à la durée maximum de transmission de données de multidiffusion au terminal utilisateur.

8. Procédé selon la revendication 7, dans lequel si la valeur de service est la quantité de MSK envoyées au terminal utilisateur et la valeur de service admissible est la durée maximum de transmission de données de multidiffusion au terminal utilisateur, la condition de terminaison est que la quantité actuelle de MSK envoyées au terminal utilisateur soit égale ou supérieure à la quantité maximum des MSK convertie à partir de la durée maximum de transmission de données de multidiffusion au terminal utilisateur.

9. Procédé selon la revendication 2, dans lequel la condition de terminaison est que la limite temporelle dont dispose le terminal utilisateur pour accéder au service de multidiffusion souscrit ait expiré.

10. Procédé selon la revendication 9, dans lequel la condition de terminaison que la limite temporelle dont dispose le terminal utilisateur pour accéder au service de multidiffusion souscrit ait expiré comprend : le fait que la quantité de MSK envoyées au terminal utilisateur soit égale ou supérieure à la quantité maximum de MSK envoyées au terminal utilisateur convertie à partir de la limite temporelle d'accès au service de multidiffusion souscrit.

11. Procédé selon la revendication 9, dans lequel la limite temporelle d'accès par le terminal utilisateur au service de multidiffusion souscrit est obtenue par le biais des étapes suivantes :
à la réception d'un message d'intégration à un groupe de multidiffusion depuis le terminal utilisateur, l'enregistrement par le dispositif de service de multidiffusion de l'ID d'utilisateur du terminal utilisateur et de la limite temporelle dont dispose le terminal utilisateur pour accéder au service de multidiffusion souscrit.

12. Procédé selon la revendication 2, dans lequel la condition de terminaison est qu'un message demandant la terminaison d'une session d'utilisateur depuis un système de commande en ligne ait été reçu.

13. Procédé selon la revendication 2, dans lequel la condition de terminaison comprend :
le fait qu'une valeur de service actuelle soit égale à la valeur de service admissible du terminal utilisateur, l'expiration de la limite temporelle dont dispose le terminal utilisateur pour accéder au service de multidiffusion souscrit, ou la réception d'un message de requête de terminaison de session d'utilisateur du terminal utilisateur depuis un Système de Commande en Ligne ; ou une combinaison aléatoire des trois ;
et
dans lequel la détermination que la condition de terminaison est satisfaite ou non comprend : la détermination qu'une condition quelconque incluse dans la condition de terminaison est satisfaite ou non, si l'une quelconque des conditions incluses dans la condition de terminaison est satisfaite, la confirmation que la condition de terminaison est satisfaite.

14. Procédé selon la revendication 1, comprenant en outre : à la réception de la réponse, la détermination par le dispositif de service de multidiffusion qu'il existe ou non un autre terminal utilisateur du service de multidiffusion actuel dans le réseau, dans l'affirmative, la continuation de la transmission des données de multidiffusion ; dans la négative, la terminaison de la transmission.

15. Procédé selon la revendication 1, dans lequel le dispositif de service de multidiffusion correspond à un Centre de Service de Diffusion/Multidiffusion, BM-SC, et le dispositif qui libère les ressources de réseau correspond à un Noeud de Support de Service Radio par Paquets Général Passerelle, (GPRS), GGSN.

16. Procédé selon la revendication 15, dans lequel la libération des ressources de réseau correspond à la libération des ressources de réseau par une entité de réseau en fonction de la notification provenant du GGSN.

17. Procédé selon la revendication 16, dans lequel l'entité de réseau qui libère les ressources de réseau est un Noeud de Support GPRS de Desserte, SGSN.

18. Procédé selon la revendication 1, dans lequel l'entité de réseau qui libère les ressources de réseau correspond à un SGSN.

19. Procédé selon la revendication 15, comprenant en outre : à la réception d'un message d'intégration à un groupe de multidiffusion depuis un terminal utilisateur, l'envoi (203) par le GGSN d'un message de Requête d'Authentification et d'Autorisation, AAR, contenant une ID de session au BM-SC, l'ID de session se rapportant au terminal utilisateur qui émet le message d'intégration au groupe de multidiffusion ; l'obtention et l'enregistrement (204) par le BM-SC de l'ID de session du terminal utilisateur contenue dans le message AAR ;
l'envoi (216) par le BM-SC au GGSN d'une requête de terminaison de la session d'utilisateur, l'ID de session du terminal utilisateur étant contenue dans la requête de terminaison de la session d'utilisateur.

20. Procédé selon la revendication 1, comprenant en outre, avant l'émission de la requête de terminaison de session d'utilisateur :
à la réception d'une requête de service de multidiffusion depuis un terminal utilisateur, l'établissement d'un canal de transmission en multidiffusion entre le terminal utilisateur et un dispositif de service de multidiffusion, et l'obtention d'une valeur de service admissible ;
l'envoi de données de multidiffusion correspondant à la requête de service de multidiffusion depuis le dispositif de service de multidiffusion au terminal utilisateur, et l'obtention dynamique d'une valeur de service de multidiffusion actuelle ;
la comparaison de la valeur de service actuelle à la valeur de service admissible obtenue, si la valeur de service actuelle est égale ou supérieure à la valeur de service admissible, l'émission de la requête de terminaison de la session d'utilisateur.

21. Procédé selon la revendication 20, dans lequel l'obtention de la valeur de service admissible comprend :
à la réception d'un message d'intégration à un groupe de multidiffusion depuis le terminal utilisateur, l'obtention par le dispositif de service de multidiffusion d'une ID d'utilisateur à partir du message reçu et l'enregistrement de l'ID d'utilisateur ;
après la confirmation que le terminal d'utilisateur est un abonné ayant effectué un prépaiement en fonction de l'ID d'utilisateur, l'obtention par le dispositif de service de multidiffusion de la valeur de service admissible du terminal utilisateur à partir d'un Système de Facturation en Ligne.

22. Procédé selon la revendication 21, dans lequel l'obtention de la valeur de service admissible du terminal utilisateur par le dispositif de service de multidiffusion à partir d'un Système de Facturation en Ligne comprend :
l'envoi d'un message de Requête de Contrôle de Crédit au Système de Facturation en Ligne par le dispositif de service de multidiffusion, le message CCR contenant l'ID d'utilisateur et les informations de facturation de service de multidiffusion ;
par le Système de Facturation en Ligne, la détermination de la limite de valeur de crédit du terminal utilisateur en fonction de l'ID d'utilisateur, le calcul de la valeur de service admissible en fonction de la limite de valeur de crédit et des informations de facturation de service de multidiffusion du terminal utilisateur et la transmission de la valeur de service admissible au dispositif de service de multidiffusion.

23. Procédé selon la revendication 20, dans lequel si la valeur de service est la quantité de MSK envoyées au terminal utilisateur, la valeur de service admissible est la quantité maximum des MSK qui pourraient être envoyées au terminal utilisateur ; et si la valeur de service est la durée de transmission de données de multidiffusion au terminal utilisateur, la valeur de service admissible est la durée maximum de transmission de données de multidiffusion au terminal utilisateur.

24. Procédé selon la revendication 23, dans lequel si la valeur de service est la quantité de MSK envoyées au terminal utilisateur, la valeur de service admissible est la durée maximum de transmission de données de multidiffusion au terminal utilisateur, et
le fait que la valeur de service actuelle soit égale à la valeur de service admissible est que la quantité actuelle de MSK envoyées au terminal utilisateur est égale ou supérieure à la quantité maximum des MSK convertie à partir de la durée maximum de transmission de données de multidiffusion au terminal utilisateur.

25. Procédé selon la revendication 24, comprenant en outre : le renvoi d'une réponse à la requête de terminaison de la session d'utilisateur au dispositif de service de multidiffusion.

26. Procédé selon la revendication 25, comprenant en outre à la réception de la réponse à la requête de terminaison de la session d'utilisateur, la détermination par le dispositif de service de multidiffusion qu'il existe ou non d'autres terminaux utilisateurs du service de multidiffusion dans le réseau, dans l'affirmative, la continuation de la transmission des données de multidiffusion, dans la négative, la terminaison de la transmission.

27. Procédé selon la revendication 25, dans lequel la requête de terminaison de la session d'utilisateur est acheminée par un message de Requête d'Abandon de Session, RAR, ou STR ; et
en conséquence, la réponse à la requête de terminaison de la session d'utilisateur, transmise en retour au dispositif de service de multidiffusion est acheminée par un message de Réponse d'Abandon de Session, RAA, ou STA.

28. Procédé selon la revendication 19, dans lequel le dispositif de service de multidiffusion correspond à un Centre de Service de Diffusion/Multidiffusion (BM-SC), et le dispositif qui libère les ressources de réseau correspond à un Noeud de Support de Service Radio par Paquets Général Passerelle (GPRS), GGSN.

29. Procédé selon la revendication 28, dans lequel la libération des ressources de réseau correspond à la libération des ressources de réseau par une entité de réseau en fonction de la notification provenant du GGSN.

30. Procédé selon la revendication 29, dans lequel l'entité de réseau est un Noeud de Support GPRS de Desserte, SGSN.

31. Procédé selon la revendication 19, dans lequel l'entité de réseau qui libère les ressources de réseau correspond à un SGSN.

32. Dispositif de service de multidiffusion, comprenant : une unité de détermination de conditions de terminaison de session et une unité de déclenchement de terminaison de session, dans lequel :
l'unité de détermination de conditions de terminaison de session sert à déterminer si un terminal utilisateur a satisfait ou non sa condition de terminaison de session d'utilisateur, et si la condition de terminaison de session d'utilisateur est satisfaite, à produire en sortie une instruction de terminaison de session adressée à l'unité de déclenchement de terminaison de session ; et
l'unité de déclenchement de terminaison de session sert à émettre une requête de terminaison de session d'utilisateur comportant une ID de session à la réception de
l'instruction de terminaison de session, la requête de terminaison de la session d'utilisateur étant acheminée par un message de Requête d'Abandon de Session, ASR.

33. Dispositif selon la revendication 32, comprenant en outre :
une unité de configuration pour recevoir des informations de configuration, pour chaque terminal utilisateur, générer une condition de terminaison de session d'utilisateur, et configurer une condition de terminaison de session d'utilisateur pour l'unité de détermination de conditions de terminaison de session.

34. Dispositif selon la revendication 32 ou 33, le dispositif correspondant à un BM-SC.

35. Dispositif de terminaison de sessions d'utilisateur, comprenant : une unité de réception de requêtes et une unité de terminaison de sessions, dans lequel :
l'unité de réception de requêtes sert à recevoir une requête de terminaison de session d'utilisateur qui comporte une ID de session, et à produire en sortie une instruction contenant l'ID de session adressée à l'unité de terminaison de sessions ; et
l'unité de terminaison de sessions sert à recevoir l'instruction depuis l'unité de réception de requêtes, et à libérer les ressources de réseau occupées correspondant à l'ID de session contenue dans l'instruction, et à renvoyer (217) une réponse à la requête de terminaison de la session d'utilisateur, la réponse à la requête de terminaison de la session d'utilisateur étant acheminée par un message de Réponse d'Abandon de Session, ASA.

36. Dispositif selon la revendication 35, le dispositif correspondant à un GGSN.

37. Système de service de multidiffusion, comprenant : un dispositif de service de multidiffusion tel que défini à la revendication 34 et un dispositif de terminaison de sessions d'utilisateur tel que défini à la revendication 37 ;
dans lequel :
le dispositif de service de multidiffusion sert à envoyer une requête de terminaison de session d'utilisateur au dispositif de terminaison de sessions d'utilisateur qui contient une ID de session quand la condition de terminaison de session d'utilisateur est satisfaite ; et
le dispositif de terminaison de sessions d'utilisateur sert à recevoir la requête de terminaison de session d'utilisateur depuis le dispositif de service de multidiffusion,
et à libérer les ressources de réseau occupées correspondant à l'ID de session contenue dans la requête.

38. Système selon la revendication 37, dans lequel le dispositif de service de multidiffusion correspond à un BM-SC, et le dispositif de terminaison de sessions d'utilisateur correspond à un GGSN.
